(19) Europäisches Patentamt
European Patent Office
Office européen des brevets

(11) **EP 1 710 143 B1**

(12) **EUROPEAN PATENT SPECIFICATION**

(45) Date of publication and mention
of the grant of the patent:
**02.04.2008 Bulletin 2008/14**

(51) Int Cl.:
*B60W 10/02* (2006.01)          *B60W 10/06* (2006.01)

(21) Application number: **05102764.7**

(22) Date of filing: **08.04.2005**

(54) **Clutch slip protection**

Kupplungsschlupfschutzvorrichtung

Dispositif de protection d'embrayage contre patinage

(84) Designated Contracting States:
**AT BE BG CH CY CZ DE DK EE ES FI FR GB GR HU IE IS IT LI LT LU MC NL PL PT RO SE SI SK TR**

(43) Date of publication of application:
**11.10.2006 Bulletin 2006/41**

(73) Proprietor: **Scania CV AB (publ)**
**151 87 Södertälje (SE)**

(72) Inventors:
• **Pettersson, Henrik**
**151 48 Södertälje (SE)**
• **Järgenstedt, Mats**
**151 46 Södertälje (SE)**

(56) References cited:
**GB-A- 2 280 721          US-A- 6 033 342**
**US-A- 6 040 768**

## Description

## Technical field

The invention generally relates to motor vehicles and, in particular, to a method and arrangement for clutch slip protection for a motor vehicle. The invention further relates to a computer program product comprising instructions for bringing a computer to cause steps of such a method, a computer program for executing the clutch slip protection, and an electronic control unit for such a system.

## Background art

Normally, motor vehicles are equipped with a mechanical friction-gearshift clutch, e.g. of disc type, arranged between the engine, for example, an internal combustion engine, and a mechanical speed-change gear. When starting the vehicle or when changing the speeds of the speed-change gear, the driver disengages and engages a clutch.

Excessive clutch wear causes a not negligible extra cost to the vehicle owner, not only in terms of direct costs of clutch replacement and repairs but also because of consequent indirect costs of vehicle standstill. Clutch wear is, to a great extent, caused by clutch slip, i.e. the linings of the clutch on the incoming shaft, i.e. the engine shaft, and the outgoing shaft rotate with different speeds.

US 6 033 342 discloses an arrangement for slip control where the engine torque is reduced during a predetermined period of time including a time interval beyond the end of the slip state has elapsed. This arrangement includes a position sensor arranged at the gearshift clutch to detect the engagement position of the clutch, which output is used at determination of clutch slip together with output signals from a speed sensor for detecting engine speed of the engine and a transmission speed sensor detecting the input speed of the speed change gear. In an alternative embodiment, the transmission speed sensor is changed to a gear position sensor detecting the current gear position of the speed-change gear.

However, this known arrangement or system is impaired with a severe problem in the fact that it requires further sensors along the driveline which are undesirable because of complicating the system. Moreover, they are not usually used in many of heavy vehicles of today. Accordingly, in order to install this known system an instalment of a number of sensors are also required in many cases. The reliability of the system may also be negatively affected by an increased number of sensors due to the fact that the number of potential error sources increases at a corresponding extent.

Thus, there is need of an improved method and a system for handling clutch slip in vehicles where the problems with the state of the art can be substantially eliminated.

## Disclosure of the invention

It is an object of the invention to provide an improved method and a system for clutch slip protection in vehicles where the problems with the state of the art can be substantially eliminated.

It is another object with the invention to provide a method and a system for clutch slip protection applicable in a substantially broad range of vehicles.

It yet another object with the invention to provide a method and a system for clutch slip protection that can be used with manually operated gearboxes as well as automated gearboxes.

These and other objects are achieved according to the invention by providing a method, a system, a computer program product, an electronic control unit, and a computer program having the features defined in the independent claims. Preferred embodiments are defined in the dependent claims.

According a to first aspect of the invention, there is provided a method for clutch slip protection in a vehicle driven by a motor, such as an internal combustion engine, the clutch being arranged in a torque transmission path of the motor between the motor and a gear box, wherein the vehicle further includes an output adjustment means arranged to adjust the output power of the motor, said method comprises the steps of obtaining a value corresponding to the engine speed of the vehicle; and, if the occurrence of clutch slip is established, controlling the present engine torque to obtain cessation of said clutch slip. The method further comprises the steps of: obtaining a value corresponding to the propeller shaft speed; determining the quotient between the value corresponding to the engine speed and the value corresponding to the propeller shaft speed as a gear ratio value; estimating a gear ratio value of the gear box by substantially continuously calculating the present relationship between the engine speed and the propeller shaft speed; establishing the occurrence or non-occurrence of clutch slip of the clutch utilizing the estimated gear ratio value.

According to a second aspect of the invention, there is provided a system for clutch slip protection in a vehicle driven by a motor, such as an combustion engine, the clutch being arranged in a torque transmission path of the motor between the motor and a gear box, wherein the vehicle further includes an output adjustment means arranged to adjust the output power of the motor, said system comprises clutch slip protection means; and engine speed sensing means arranged to sense the engine speed of the vehicle, wherein the clutch slip protection means is arranged to obtain a value corresponding to the engine speed of the vehicle; and, at establishment of the occurrence of clutch slip, send a control instruction to said output adjustment means to control the present engine torque to obtain cessation of the clutch slip. The system further comprises output shaft speed sensing means arranged to sense the propeller shaft speed, said sensing means being arranged to communicate with the clutch slip protection means, wherein said clutch slip protection means is arranged to obtain a value corresponding to the propeller shaft speed; determine the quotient between the engine speed and the propeller speed as a gear ratio value; and wherein the clutch slip protection means comprises processing means and storing means arranged to store said gear ratio value, wherein said clutch slip protection means is arranged to: substantially continuously calculate the present relationship between the engine speed and the propeller shaft speed to estimate a gear ratio value of the gear box; establish the occurrence or non-occurrence of clutch slip utilizing said estimated gear ratio value.

According to third aspect of the invention, there is provided a computer program for an electronic control unit of a vehicle. The program comprises program instructions, which when run on the electronic control unit, brings the electronic control unit to cause the steps of the method according to the first aspect of the invention.

According to fourth aspect of the invention, there is provided a computer program product comprising computer readable medium and a computer program according to the third aspect, wherein the computer program is stored on the computer readable medium.

According to a further aspect of the invention, there is provided an electronic control unit of a vehicle. The control unit comprises a storage means comprising a computer program according to the third aspect.

The invention is based on the idea of handling clutch slip by using signals or information present, i.e. sensors, in the drive train of the vehicle. This is possible since the occurrence of clutch slip is established by estimating a gear ratio value of the gear box. The invention discloses advantages in comparison to the solution disclosed in US 6 033 342, where further sensors along the driveline are required, for example, a gear position sensor detecting the current gear position of the speed-change gear. This is undesirable because it complicates the system.

Another advantage is that the invention can be implemented in a vehicle substantially without any major modifications of the present control units of the vehicle, which is required when installing the known system since, for example, a gear position sensor detecting the current gear position of the speed-change gear have to be installed.

In one embodiment of the invention, a pre-stored gear ratio value representing an actual gear ratio value of said vehicle is selected and compared with the calculated gear ratio value during a first period of time. If the calculated gear ratio value is substantially equal to said selected gear ratio value during said first period of time, the selected gear ratio value is determined to be the present gear ratio value. Thus, it is verified that the estimated or calculated gear ratio is an actual gear ratio. The reliability is increased by performing the comparison during a period of time.

According to another embodiment of the invention, if the selected gear ratio value is determined to be the present gear ratio, the engine torque is reduced to a second lower engine torque level, and the actual engine torque is maintained at said at least second lower level during a second predetermined period of time. Thereby, it is checked whether the gear ratio being assumed to be an actual gear ratio is qualified, i.e. whether the gear ratio being identified as an actual gear ratio in fact is an actual gear ratio, and the risk that, even if the estimated present gear ratio is determined to be an actual gear ratio, the estimated gear ratio is a fixed clutch slip corresponding to an actual gear ratio can be significantly reduced. Furthermore, this period of time with reduced engine torque also allows the clutch linings to cool down.

As realized by the person skilled in the art, the method of the invention, as well as embodiments thereof, is suitable to realize or implement as a computer program or a computer program product.

Further objects and advantages of the invention will be discussed below by means of exemplifying embodiments.

## Brief description of the drawings

Embodiments of the invention will now be described in greater detail with reference to the accompanying drawings, in which:

Fig. 1 shows a schematic block representation of the drive train arrangement for a motor vehicle according to an embodiment of the invention.

Fig. 2 shows a schematic block representation of the drive train arrangement for a motor vehicle according to another embodiment.

Fig. 3 shows the general principles of the method for clutch slip protection in a vehicle according to the invention.

Fig. 4 shows an embodiment of the method according to the invention for clutch slip protection.

Fig. 5 shows the principles of the engine torque reduction procedure of the clutch slip protection procedure according to the invention.

**Mode(s) for carrying out the invention**

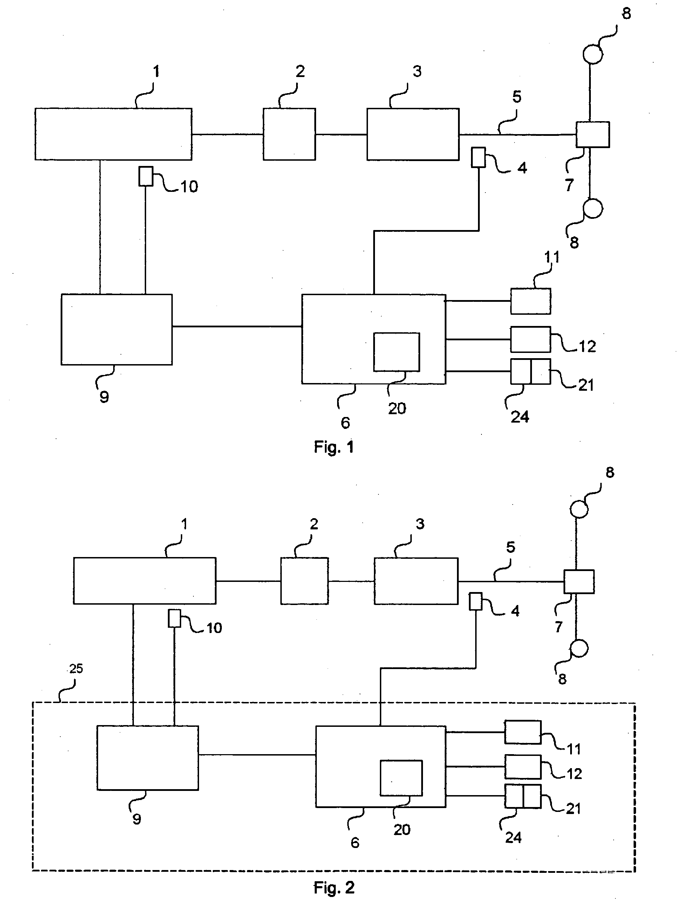

With reference first to Fig. 1, the drive train arrangement for a motor vehicle according to the invention will be described. A motor, e.g. an internal combustion engine, is denoted by reference numeral 1, a clutch by 2, and a gearbox by 3. As the skilled man realizes, the invention can also be used with, for example, an electric motor. A speed sensor (detector) 4 arranged to detect the speed of a shaft arranged at the output side of the gearbox 3, for example, the propeller shaft 5 or the output shaft of the gearbox, is connected to a clutch slip protection means 6. The slip protection means 6 communicates with engine output adjustment means in the form of an engine control system 9, which is arranged to control the operation of the engine 1. Furthermore, the clutch slip protection means 6 is arranged to detect the occurrence of clutch slip and to instruct the engine control system 9 to control the torque of the engine 1 to obtain a cessation of the clutch slip. This will be described in further detail below. Signals from the speed sensor 4 are converted in the protection means 6 to values representing the output shaft's instantaneous angular speed. The gearbox output shaft is connected to a final gear 7 which, in turn, is connected to the wheels 8 of the vehicle.

Furthermore, the slip protection means 6 communicates with engine output adjustment means or an engine control system 9, which is arranged to control the operation of the engine 1. An engine speed sensor 10 is arranged to detect the speed of the engine. Signals from the engine speed sensor 10 are converted in the engine control system 9 to instantaneous values thereof. These instantaneous values of the engine speed are communicated with the slip protection means 6 together with signals indicating the engine torque, which in one embodiment is based on the fuel quantity injected. The obtained values of the engine speed and the propeller shaft speed are stored in a storing means, in one embodiment, an intermediate memory 11 connected to the slip protection means 6. A second storing means or memory 12 connected to the slip protection means 6 is provided with gear ratio values for the various possible gear combinations in the vehicle's gearbox.

The slip protection means 6 comprises a processor 20 to which a third storing means 21, in addition to the first and second storing means 11 and 12, is connected. In this embodiment, first and third storing means 12 and 21 or computer readable medium comprises a random access memory (RAM) (not shown) in addition to various non-volatile memories such as read-only memory (ROM) (not shown) and keep-alive memory (KAM) (not shown). In this embodiment, the read-only third memory comprises a computer program 24 comprising instructions for bringing a computer to cause method steps in accordance with the invention. Computer readable medium 21 communicates with processor 20 via a standard control/address bus (not shown). As will be appreciated by one of ordinary skill in the art, computer readable medium may comprise various types of physical devices for temporary and/or persistent storage of data which comprises solid state, magnetic, optical and combination devices. For example, the computer readable medium may be implemented using one or more physical devices such as a hard-drive, DRAM, PROMS, EPROMS, EEPROMS, flash memory, and the like. Depending upon the particular application, the computer readable meadium may also comprises floppy disks, CD ROM, and the like.

According to another embodiment, the slip protection means 6 and the engine control system 9 are incorporated within the content of an electronic control unit 25, as shown in Fig. 2.

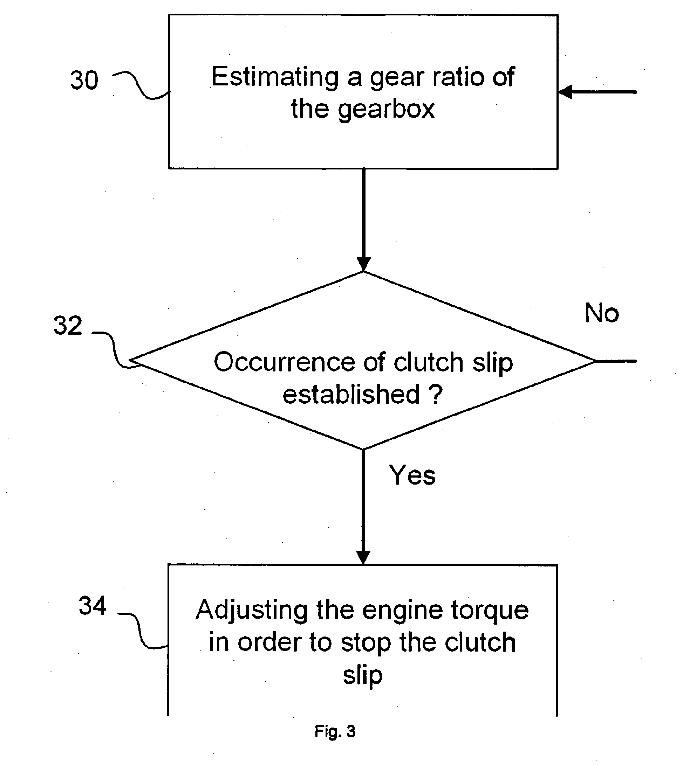

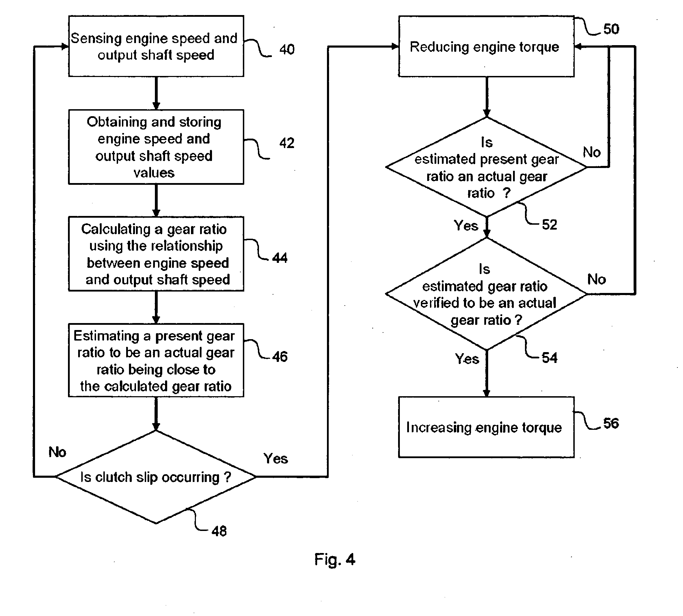

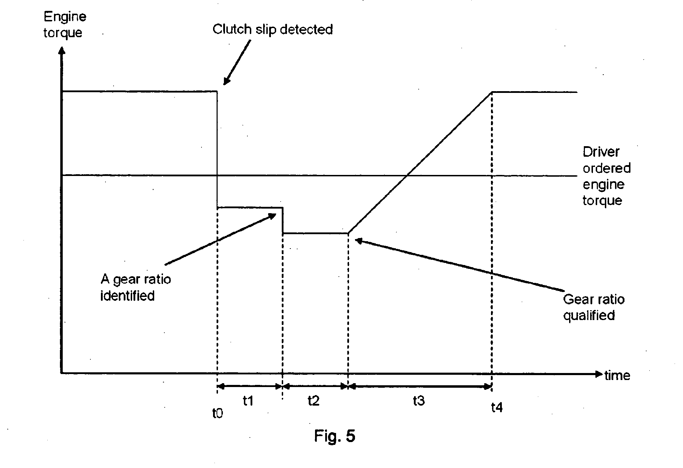

The general principles of the method for clutch slip protection in a vehicle according to the invention will now be described with reference to Fig. 3. First, at step 30, the gear ratio of the gear box 3 is estimated. Then, at step 32, it is checked whether clutch slip of the gear box occurs utilizing the estimated gear ratio value. If the occurrence of clutch slip is established, the algorithm proceeds to step 34 where the present engine torque is adjusted or controlled to obtain a cessation of the clutch slip. That is, the processing means 20 is arranged to, at establishment of the occurrence of clutch slip, send a control instruction to the engine control system 9 instructing it to control the present engine torque to obtain cessation of the clutch slip. This control scheme will be described below with reference to Figs. 4 and 5. On the other hand, if the non-occurrence of clutch slip is established at step 32, the algorithm returns to step 30.

Turning now to Figs. 4 and 5, an embodiment of the method for clutch slip protection will be explained in detail. First, at step 40, the present engine speed is sensed by means of engine speed sensor 10 and the present propeller shaft speed is sensed by means of speed sensor 4. Then, at step 42, signals from the speed sensor 4 are converted in the slip protection means 6 to values representing the output shaft's instantaneous angular speed and signals from the engine speed sensor 10 are converted in the engine control system 9 to instantaneous values thereof, the values are communicated to the slip protection means 6. These instantaneous values of the engine speed are communicated with the slip protection means 6 together with signals indicating the engine torque, which in one embodiment is based on the fuel quantity injected. The obtained values of the engine speed and the propeller shaft speed are stored in the intermediate memory 11 connected to the slip protection means 6. At step 44, the present relationship between the engine speed and the propeller shaft speed is calculated in the slip protection means 6 using the following equation:

$$\hat{G} = \frac{n_{engine}}{n_{gearbox}}.$$

,where $n_{gearbox}$ is the speed of the propeller shaft and $n_{engine}$ is the engine speed. It should be noted that the obtaining of the speed values and the following calculation of the present gearbox ratio can be performed on a continuous basis. Subsequently, at step 46, based on this quotient between the engine speed and the propeller shaft speed, a gear ratio value of the various possible gear combinations of the gear box 3 stored in the memory 12 being closest to the calculated quotient is collected from the memory 12. This collected gear box ratio is estimated to be the present gear box ratio G. In one embodiment, the gear ratio of the gear box 3 identified to be the next lower gear box ratio in relation to the calculated quotient is set to G, i.e. the present gear box ratio.

Then, at step 48, the occurrence or non occurrence of clutch slip is determined by the following equation:

$$\Delta n = n_{engine} - n_{gearbox}*G \qquad \text{(eqt. 2)}$$

[0038]  , where G is the present actual gearbox ratio as mentioned above. According to one embodiment, non-occurrence of clutch slip is established if $\triangle n$ is within a range +/- d, where d a predetermined number, and if $\triangle n$ is not within the range, occurrence of clutch slip is established. In one embodiment, d is within a range of 50 rpm - 150 rmp.

Thus, if clutch slip is not established the algorithm returns to step 40, otherwise the algorithm proceeds to step 50, where the present engine torque is collected from the engine control system 9, the engine torque value is stored as the initial engine torque, for example, in storing means 11, and the present engine torque is reduced in accordance with the following equation:

$$M_{max} = M_E - K\Delta n$$

$$\text{(eqt. 3)}$$

[0041]  , where $M_{max}$ is the maximum allowed engine torque, $M_E$ is the present engine torque, K is a predetermined reduction factor, and $\Delta n$ is the calculated clutch slip from equation 2. According to one embodiment, K is set to a value in the range of 1-3.

Thereafter, at step 52, it is checked whether the estimated present gearbox ratio corresponds to an actual gear ratio of the gearbox 3. To this end, the reduced engine torque is maintained during a period of time, $t_1$, having a predetermined length see Fig. 5. In one embodiment, $t_1$ is a period of time in the range of 0-1.5 seconds. If $\Delta n$ is within the preset range mentioned above, i.e. the clutch slip is assumed to have stopped, the estimated gear ratio is determined to be an actual gear ratio. If $\Delta n$ is not within the range, i.e. the clutch slip still exists, the algorithm returns to step 50, where a new engine reduction is calculated in accordance with equation 3 using the present $\Delta n$. However, if at step 52 it was determined that the calculated gear ratio was qualified, the algorithm proceeds to step 54, where it is checked whether the gear ratio being assumed to be an actual gear ratio is qualified, i.e. whether the gear ratio being identified as an actual gear ratio in fact is an actual gear ratio. This is due to the fact that, even if the estimated present gear ratio is determined to be an actual gear ratio in step 52, the estimated gear ratio may be a fixed clutch slip corresponding to an actual gear ratio. This check is performed by means of a further reduction of the engine torque, which reduced engine torque is maintained during a second predetermined period of time $t_2$, see Fig. 5. This reduction of the engine torque is small, for example approximately 10-40 Nm. This second period of time is approximately 2-20 seconds, and in one embodiment $t_2$ is set to about 5 seconds. If the gear ratio is maintained substantially during $t_2$, the identified gear ratio is verified to be an actual gear ratio, the clutch slip has, accordingly, ceased, and the algorithm proceeds to step 56 where the engine torque is increased. The period of time $t_2$ also allows the clutch lining to cool down. However, if no in step 54, i.e. the gear ratio is not maintained during the period $t_2$, the algorithm returns to step 50. According to one embodiment of the invention, the engine torque is ramped up with a predetermined rate per second during a period of time $t_3$, which in one embodiment is approximately 10 seconds. In another embodiment, the engine torque is stepped up to the initial engine torque during the period of time $t_3$.

In Fig. 5 the principles of the engine torque reduction procedure of the clutch slip protection procedure according to one embodiment of the invention is shown. The engine torque is indicated at the vertical axis and time at the horizontal axis. At the time point to a clutch slip is detected, i.e., according to the embodiment described above, $\triangle n$ is not within the range +/-d and consequently occurrence of clutch slip is established. Then the engine torque is reduced in accordance with equation 3 and the reduced engine torque is maintained during the period of time $t_1$.If the clutch still slipping, the engine torque is reduced a further step in accordance with equation 3. If the clutch slip has ceased, the engine torque is also reduced a step in order to verify that the estimated gear ratio is the actual gear ratio. As described above, this reduced level is maintained during a period of time $t_2$ and if the estimated gear ratio is substantially maintained during this period of time the estimated gear ratio is assumed to be an actual gear ratio. Furthermore, the clutch linings are also allowed to cool down during this period of time. Then, the engine torque is increased to the initial engine torque. According to one embodiment of the invention, the engine torque is ramped up with a predetermined rate per second during a period of time $t_3$, which in one embodiment is approximately 10 seconds. Finally, at the point of time $t_4$ the engine torque has reached the initial engine torque.

According to a further embodiment, the clutch slip stopping function cannot be activated unless at least one preset additional condition is satisfied. A first condition may be that the function cannot be activated during a gear shift or during a period of time following the gear shift, which may be within the range of 10-30 seconds. A gear shift is defined as a condition where the control system 9 control the engine 1 or when the clutch pedal is pressed during a period of time exceeding $t_3$ . A second condition may be that the velocity of the vehicle must exceed a predetermined velocity $V_1$, which may be within the range of 10-30 km/h. A third condition may be that the engine torque only can be reduced to a lower limit. Of course, as the skilled man realizes, these additional conditions can be combined arbitrarily.

Although specific embodiments have been shown and described herein for purposes of illustration and exemplification, it is understood by those of ordinary skill in the art that the specific embodiments shown and described may be substituted for a wide variety of alternative and/or equivalent implementations without departing from the scope of the invention. Those of ordinary skill in the art will readily appreciate that the invention could be implemented in a wide variety of embodiments, comprising hardware and software implementations, or combinations thereof. This application is intended to cover any adaptations or variations of the embodiments discussed herein. Consequently, the invention is defined by the wordings of the appended claims.

## Claims

1. A method for clutch slip protection in a vehicle driven by a motor (1), said clutch (2) being arranged in a torque transmission path of said motor (1) between said motor (1) and a gear box (3), wherein said vehicle further includes an output adjustment means (9) arranged to adjust the output power of said engine (1), said method comprises the steps of obtaining (42) a value corresponding to the engine speed of the vehicle; and, if the occurrence of clutch slip is established, controlling (34, 50) the present engine torque to obtain cessation of said clutch slip, **characterised by** the steps of: obtaining (42) a value corresponding to the propeller shaft speed; determining (44) the quotient between the value corresponding to the engine speed and the value corresponding to the propeller shaft speed as a gear ratio value; estimating (30, 46) a gear ratio value of said gear box by substantially continuously calculating (44) the present relationship between the engine speed and the propeller shaft speed; establishing (32, 48) the occurrence or non-occurrence of clutch slip of said clutch utilizing said estimated gear ratio value.

2. The method according to claim 1, wherein the step of estimating further comprises the steps of: selecting (46) a pre-stored gear ratio value representing an actual gear ratio value of said vehicle; comparing (52) said calculated gear ratio value with said selected gear ratio value during a first period of time; and if said calculated gear ratio value is substantially equal to said selected gear ratio value during said first period of time, determining (52) said selected gear ratio value to be the present gear ratio value.

3. The method according to claim 1 or 2, wherein the occurrence or non occurrence of clutch slip is established if $\Delta n > d$, where $\Delta n = |n_{engine} - n_{gearbox} * G|$, where $\triangle n$ is the clutch slip, $n_{engine}$ is the value corresponding to the engine speed, $n_{gearbox}$ is the value corresponding to the propeller shaft speed, d is a predetermined number, and G is said determined present gear ratio value.

4. The method according to claim 1-3, further comprising the steps of: if the occurrence of clutch slip is established (32, 48), obtaining (50) a value corresponding to the engine torque level; and storing (50) said value corresponding to the engine torque level as an initial engine torque level.

5. The method according to claim 1-4, wherein the step of controlling comprises the steps of: reducing (50) the present engine torque level to a first lower engine torque level, wherein said first lower engine torque level is based on said estimated gear ratio value; and maintaining (52) said first lower engine torque during a first period of time.

6.  The method according to claim 1-5, further comprising the step of: establishing (32, 48) whether a clutch slip has ceased utilizing said estimated gear ratio value.

7.  The method according to claim 6, wherein the step of establishing whether said clutch slip has ceased comprises the steps of: if it said selected gear ratio value is determined to be the present gear ratio, reducing said engine torque to a second lower engine torque level; and maintaining (54) the actual engine torque at said at least second lower level during a second predetermined period of time.

8.  The method according to claim 6 or 7, further comprising the step of: if it is established that said clutch slip has ceased, successively increasing (56) the actual engine torque level to said initial engine torque level.

9.  The method according to claim 6, further comprising the step of: if it is not established that said clutch slip has ceased, reducing (50) the present engine torque level to at least one second lower engine torque level, wherein said first lower engine torque level is based on said estimated gear ratio value; and maintaining (52) said second engine torque level during a period of time substantially equal to said first period of time.

10. The method according to claim 8, wherein the step of increasing comprises the step of: ramping up (56) said actual engine torque level to said stored initial engine torque level during a second period of time.

11. The method according to claim 5-10, further comprising the step of calculating said lower engine torque levels according to $M_{max} = M_E - K\Delta n$, where $M_{max}$ is the maximum allowed engine torque, $M_E$ is a value corresponding to the present engine torque, K is a predetermined reduction factor, and $\Delta n$ is the calculated clutch slip.

12. A system for clutch slip protection in a vehicle driven by motor (1), said clutch (2) being arranged in a torque transmission path of said motor (1) between said motor (1) and a gear box (3), wherein said vehicle further includes an output adjustment means (9) arranged to adjust the output power of said motor (1), said system comprises clutch slip protection means (6); and engine speed sensing means (10) arranged to sense the engine speed of the vehicle, wherein said clutch slip protection means (6) is arranged to obtain a value corresponding to the engine speed of the vehicle; and, at establishment of the occurrence of clutch slip, send a control instruction to said output adjustment means (9) to control the present engine torque to obtain cessation of said clutch slip, **characterised in that** said system comprises output shaft speed sensing means (4) arranged to sense the propeller shaft speed, said sensing means (4, 10) being arranged to communicate with said clutch slip protection means (6), wherein said clutch slip protection means (6) is arranged to obtain a value corresponding to the propeller shaft speed; determine the quotient between the engine speed and the propeller speed as a gear ratio value; and wherein said clutch slip protection means (6) comprises processing means (20) and storing means (12) arranged to store said gear ratio value, wherein said clutch slip protection means is arranged to: substantially continuously calculate the present relationship between the engine speed and the propeller shaft speed to estimate a gear ratio value of said gear box (3); establish the occurrence or non-occurrence of clutch slip utilizing said estimated gear ratio value.

13. The system according to claim 12, wherein said clutch slip protection means (6) is arranged to select a pre-stored gear ratio value representing an actual gear ratio value of said vehicle as present gear ratio value; compare said calculated gear ratio value with said selected gear ratio value during a first period of time; and, if said calculated gear ratio value is substantially equal to said selected gear ratio value during said first period of time, determine said selected gear ratio value to be the present gear ratio value.

14. The system according to claim 12 or 13, wherein the occurrence or non occurrence of clutch slip is established if $\Delta n > d$, where $\Delta n = |n_{engine} - n_{gearbox}*G|$, where $\Delta n$ is the clutch slip, $n_{engine}$ is the value corresponding to the engine speed, $n_{gearbox}$ is the value corresponding to the propeller shaft speed, d is a predetermined number, and G is said determined present gear ratio value.

15. The system according to claim 12-14, wherein said vehicle further comprises sensing means arranged to substantially constantly sensing the present engine torque level, wherein said clutch slip protection means (6) is arranged to obtain a value corresponding to the present engine torque level.

16. The system according to claim 12-15, wherein said clutch slip protection means (6) is arranged to send a control instruction to said output adjustment means (9) to control the present engine torque to reduce the present engine torque level to a first lower engine torque level, wherein said first lower engine torque level is based on said estimated gear ratio value; and maintain said first lower engine torque during a first period of time.

17. The system according to claim 12-16, wherein said clutch slip protection means (6) is arranged to establish whether a clutch slip has ceased utilizing said estimated gear ratio value.

18. The system according to claim 17, wherein said clutch slip protection means (6) is arranged to send a control instruction to said output adjustment means (9) to control the present engine torque to: if it said selected gear ratio value is determined to be the present gear ratio, reduce said engine torque to a second lower engine torque level; and maintain the actual engine torque at said at least second lower level during a second predetermined period of time.

19. The system according to claim 17 or 18, wherein said clutch slip protection means (6) is arranged to send a control instruction to said output adjustment means (9) to control the present engine torque to: if it is established that said clutch slip has ceased, successively increase the actual engine torque level to said initial engine torque level.

20. The system according to claim 17, wherein said clutch slip protection means (6) is arranged to send a control instruction to said output adjustment means (9) to control the present engine torque to: if it is not established that said clutch slip has ceased, reduce the present engine torque level to at least one second lower engine torque level, wherein said first lower engine torque level is based on said estimated gear ratio value; and maintain said second engine torque level during period of time substantially equal to said first period of time.

21. The system according to claim 19, wherein said clutch slip protection means (6) is arranged to send a control instruction to said output adjustment means (9) to control the present engine torque to increase said engine torque by ramping up said actual engine torque level to said stored initial engine torque level during a second period of time.

22. The system according to claim 16-21, wherein said lower engine torque levels are calculated according to $M_{max} = M_E - K\Delta n$, where $M_{max}$ is the maximum allowed engine torque, $M_E$ is a value corresponding to the present engine torque, K is a predetermined reduction factor, and $\Delta n$ is the calculated clutch slip.

23. A computer program (24) for an electronic control unit (25) of a vehicle for clutch slip protection **characterized in that** said program (24) comprises program instructions, which when run on the electronic control unit (25), brings the electronic control unit (25) to cause the steps of any one of claims 1-11.

24. A computer program product comprising computer readable medium (21) and a computer program (24) according to claim 23, wherein said computer program (24) is stored on said computer readable medium (21).

25. An electronic control unit (25) of a vehicle, **characterised in that** a storage means (21) of said control unit comprises a computer program (24) according to claim 23.

**Patentansprüche**

1. Verfahren zum Schutz vor Kupplungsschlupf in einem von einem Motor (1) angetriebenen Fahrzeug, wobei die Kupplung (2) in einem Drehmomentübertragungspfad des Motors (1) zwischen dem Motor (1) und einem Getriebe (3) angeordnet ist, wobei das Fahrzeug ferner ein Leistungseinstellmittel (9) aufweist, das angeordnet ist, um die Ausgangsleistung des Motors (1) einzustellen, wobei das Verfahren die Schritte umfasst:

Erhalten (42) eines Wertes, der der Motordrehzahl des Fahrzeugs entspricht; und dann, wenn das Auftreten von Kupplungsschlupf bestätigt ist, Steuern (34, 50) des gegenwärtigen Motordrehmoments, um eine Beendigung des Kupplungsschlupfes zu erreichen, **gekennzeichnet durch** die Schritte:

Erhalten (42) eines Werts, der der Antriebswellendrehzahl entspricht;
Bestimmen (44) des Quotienten zwischen dem Wert, der der Motordrehzahl entspricht, und dem Wert, der der Antriebswellendrehzahl entspricht, als Getriebeübersetzungswert;
Schätzen (30, 46) eines Getriebeübersetzungswerts des Getriebes **durch** im Wesentlichen kontinuierliches Berechnen (44) des gegenwärtigen Verhältnisses zwischen der Motordrehzahl und der Antriebswellendrehzahl;
Ermitteln (32, 48) des Auftretens oder des Nicht-Auftretens von Kupplungsschlupf der Kupplung unter Verwendung des geschätzten Getriebeübersetzungswerts.

2. Verfahren nach Anspruch 1, wobei der Schritt des Schätzens ferner die Schritte umfasst: Auswählen (46) eines vorab gespeicherten Getriebeübersetzungswertes, der einen aktuellen Getriebeübersetzungswert des Fahrzeugs wiedergibt; Vergleichen (52) des berechneten Getriebeübersetzungswertes mit dem ausgewählten Getriebeübersetzungswert während einer ersten Zeitperiode; und dann, wenn der berechnete Getriebeübersetzungswert im Wesentlichen gleich dem ausgewählten Getriebeübersetzungswert während der ersten Zeitperiode ist, Bestimmen (52) des ausgewählten Getriebeübersetzungswerts als gegenwärtigen Getriebeübersetzungswert.

3. Verfahren nach Anspruch 1 oder 2, wobei das Auftreten oder Nicht-Auftreten von Kupplungsschlupf ermittelt wird, wenn $\triangle n > d$, wobei $\Delta n = |n_{Motor} - n_{Getriebe} {}^*G|$, wobei $\Delta n$ der Kupplungsschlupf ist, $n_{Motor}$ der Wert entsprechend der Motordrehzahl ist, $n_{Getriebe}$ der Wert entsprechend der Antriebswellendrehzahl ist, d eine vorbestimmte Zahl ist und G der bestimmte gegenwärtige Getriebeübersetzungswert ist.

4. Verfahren nach Anspruch 1 bis 3, ferner umfassend die Schritte: dann, wenn das Auftreten von Kupplungsschlupf ermittelt ist (32, 48), Erhalten (50) eines Werts, der dem Motordrehmomentniveau entspricht; und Speichern (50) des Werts, der dem Motordrehmomentniveau entspricht, als Anfangs-Motordrehmomentniveau.

5. Verfahren nach Anspruch 1 bis 4, wobei der Schritt des Steuerns die Schritte umfasst: Reduzieren (50) des gegenwärtigen Motordrehmomentniveaus auf ein erstes unteres Motordrehmomentniveau, wobei das erste untere Motordrehmomentniveau auf dem geschätzten Getriebeübersetzungswert basiert; und Aufrechterhalten (52) des ersten unteren Motordrehmoments während einer ersten Zeitperiode.

6. Verfahren nach Anspruch 1 bis 5, ferner umfassend den Schritt: Ermitteln (32, 48), ob ein Kupplungsschlupf unter Verwendung des geschätzten Getriebeübersetzungswerts endete.

7. Verfahren nach Anspruch 6, wobei der Schritt des Ermittelns, ob Kupplungsschlupf endete, die Schritte umfasst: dann, wenn der ausgewählte Getriebeübersetzungswert als gegenwärtige Getriebeübersetzung bestimmt wurde, Reduzieren des Motordrehmoments auf ein zweites unteres Motordrehmomentniveau; und Beibehalten (54) des aktuellen Motordrehmoments auf dem wenigstens zweiten unteren Niveau während einer zweiten vorbestimmten Zeitperiode.

8. Verfahren nach Anspruch 6 oder 7, ferner umfassend den Schritt: dann, wenn ermittelt wurde, dass der Kupplungsschlupf endete, sukzessives Erhöhen (56) des gegenwärtigen Motordrehmomentniveaus auf das Anfangs-Motordrehmomentniveau.

9. Verfahren nach Anspruch 6, ferner umfassend die Schritte: dann, wenn nicht ermittelt wurde, dass der Kupplungsschlupf endete, Reduzieren (50) des gegenwärtigen Motordrehmomentniveaus auf wenigstens ein zweites unteres Motordrehmomentniveau, wobei das erste untere Drehmomentniveau auf dem geschätzten Getriebeübersetzungsverhältniswert basiert; und Beibehalten (52) des zweiten Motordrehmomentniveaus während einer Zeitperiode, die im Wesentlichen gleich der ersten Zeitperiode ist.

10. Verfahren nach Anspruch 8, wobei der Schritt des Erhöhens den Schritt umfasst: rampenartiges Erhöhen (56) des aktuellen Motordrehmomentniveaus auf das gespeicherte Anfangs-Motordrehmomentniveau während einer zweiten Zeitperiode.

11. Verfahren nach Anspruch 5 bis 10, ferner umfassend den Schritt des Berechnens der unteren Motordrehmomentniveaus gemäß $M_{max} = M_E - K\Delta n$, wobei $M_{max}$ das maximal zulässige Motordrehmoment ist, $M_E$ ein Wert entsprechend dem aktuellen Motordrehmoment ist, K ein vorbestimmter Reduktionsfaktor ist und $\triangle n$ der berechnete Kupplungsschlupf ist.

12. System zum Schutz vor Kupplungsschlupf in einem von einem Motor (1) angetriebenen Fahrzeug, wobei die Kupplung (2) in einem Drehmomentübertragungspfad des Motors (1) zwischen dem Motor (1) und einem Getriebe (3) angeordnet ist, wobei das Fahrzeug ferner ein Leistungseinstellmittel (9) umfasst, das angeordnet ist, um die Ausgangsleistung des Motors (1) einzustellen, wobei das System ein Kupplungsschlupf-Schutzmittel (6) und Motordrehzahlerfassungsmittel (10) umfasst, die angeordnet sind, um die Motordrehzahl des Fahrzeugs zu erfassen, wobei das Kupplungsschlupf-Schutzmittel (6) angeordnet ist, um einen Wert entsprechend der Motordrehzahl des Fahrzeugs zu ermitteln; und um bei Ermittlung des Auftretens von Kupplungsschlupf einen Steuerbefehl an das Leistungseinstellmittel (9) auszusenden, um das gegenwärtige Motordrehmoment zu steuern, um eine Beendigung des Kupplungsschlupfes zu erzielen,

**dadurch gekennzeichnet, dass** das System Ausgangswellendrehzahl-Erfassungsmittel (4) umfasst, die angeordnet sind, um die Antriebswellendrehzahl zu erfassen, wobei die Erfassungsmittel (4, 10) derart ausgebildet sind, dass sie mit dem Kupplungsschlupf-Schutzmittel (6) kommunizieren, wobei das Kupplungsschlupf-Schutzmittel (6) ausgebildet ist, um einen Wert zu erhalten, der der Antriebswellendrehzahl entspricht; um einen Quotienten zwischen der Motordrehzahl und der Antriebsdrehzahl als Übersetzungsverhältniswert zu bestimmen; und wobei das Kupplungsschlupf-Schutzmittel (6) Verarbeitungsmittel (20) und Speichermittel (12) umfasst, die ausgebildet sind, um den Übersetzungsverhältniswert zu speichern, wobei das Kupplungsschlupf-Schutzmittel ausgebildet ist, um im Wesentlichen kontinuierlich das gegenwärtige Verhältnis zwischen der Motordrehzahl und der Antriebswellendrehzahl zu berechnen, um einen Übersetzungsverhältniswert des Getriebes (3) zu schätzen, und um das Auftreten oder Nicht-Auftreten von Kupplungsschlupf unter Verwendung des geschätzten Übersetzungsverhältniswerts zu ermitteln.

13. System nach Anspruch 12, wobei das Kupplungsschlupf-Schutzmittel (6) ausgebildet ist, um einen vorab gespeicherten Übersetzungsverhältniswert, der einen aktuellen Übersetzungsverhältniswert des Fahrzeugs repräsentiert, als gegenwärtigen Übersetzungsverhältniswert auszuwählen; um den berechneten Übersetzungsverhältniswert mit dem ausgewählten Übersetzungsverhältniswert während einer ersten Zeitperiode zu vergleichen; und dann, wenn der berechnete Übersetzungsverhältniswert im Wesentlichen gleich dem ausgewählten Übersetzungsverhä!tniswert während der ersten Zeitperiode ist, um den ausgewählten Übersetzungsverhältniswert als gegenwärtigen Übersetzungsverhältniswert zu bestimmen.

14. System nach Anspruch 12 oder 13, wobei das Auftreten oder Nicht-Auftreten von Kupplungsschlupf ermittelt wird, wenn $\Delta n > d$, wobei $\Delta n = |n_{Motor} - n_{Getriebe} *G|$, wobei $\Delta n$ der Kupplungsschlupf ist, $n_{Motor}$ der Wert ist, der der Motordrehzahl entspricht, $n_{Getriebe}$ der Wert ist, der der Antriebswellendrehzahl entspricht, d eine vorbestimmte Zahl ist und G der vorbestimmte gegenwärtige Übersetzungsverhältniswert ist.

15. System nach Anspruch 12 bis 14, wobei das Fahrzeug ferner Erfassungsmittel aufweist, die angeordnet sind, um im Wesentlichen kontinuierlich das gegenwärtige Motordrehzahlniveau zu erfassen, wobei das Kupplungsschlupf-Schutzmittel (6) angeordnet ist, um einen Wert zu erhalten, der dem gegenwärtigen Motordrehzahlniveau entspricht.

16. System nach Anspruch 12 bis 15, wobei das Kupplungsschlupf-Schutzmittel (6) angeordnet ist, um einen Steuerbefehl an das Ausgangsleistungs-Einstellmittel (9) auszusenden, um das gegenwärtige Motordrehmoment zu steuern, um das gegenwärtige Motordrehmomentniveau auf ein erstes unteres Motordrehmomentniveau abzusenken, wobei das erste untere Motordrehmomentniveau auf dem geschätzten Übersetzungsverhältniswert basiert; und um das erste untere Motordrehmomentniveau während einer ersten Zeitperiode beizubehalten.

17. System nach Anspruch 12 bis 15, wobei das Kupplungsschlupf-Schutzmittel (6) ausgebildet ist, um unter Verwendung des geschätzten Übersetzungsverhältniswerts zu ermitteln, ob der Kupplungsschlupf endete.

18. System nach Anspruch 17, wobei das Kupplungsschlupf-Schutzmittel (6) ausgebildet ist, um einen Steuerbefehl an das Leistungs-Einstellmittel (9) auszusenden, um das gegenwärtige Motordrehmoment zu steuern, um: dann, wenn der ausgewählte Übersetzungsverhältniswert als gegenwärtiges Übersetzungsverhältnis bestimmt wurde, das Motordrehmoment auf ein zweites unteres Motordrehmomentniveau zu reduzieren; und um das aktuelle Motordrehmoment auf dem wenigstens einen zweiten unteren Niveau während einer zweiten vorbestimmten Zeitperiode zu halten.

19. System nach Anspruch 17 oder 18, wobei das Kupplungsschlupf-Schutzmittel (6) ausgebildet ist, um einen Steuerbefehl an das Leistungs-Einstellmittel (9) zu senden, um das gegenwärtige Motordrehmoment zu steuern, um: dann, wenn ermittelt wurde, dass Kupplungsschlupf endete, sukzessive das aktuelle Motordrehmomentniveau auf das Anfangs-Motordrehmomentniveau anzuheben.

20. System nach Anspruch 17, wobei das Kupplungsschlupf-Schutzmittel (6) ausgebildet ist, um einen Steuerbefehl an das Leistungs-Einstellmittel (9) auszusenden, um das gegenwärtige Motordrehmoment zu steuern, um: dann, wenn nicht ermittelt wurde, dass der Kupplungsschlupf endete, das gegenwärtige Motordrehmomentniveau auf wenigstens ein zweites unteres Motordrehmomentniveau abzusenken, wobei das erste untere Motordrehmomentniveau auf dem geschätzten Übersetzungsverhältniswert basiert; und um das zweite Motordrehmomentniveau während einer Zeitp eriode aufrechtzuerhalten, die im Wesentlichen gleich der ersten Zeitperiode ist.

21. System nach Anspruch 19, wobei das Kupplungsschlupf-Schutzmittel (6) ausgebildet ist, um einen Steuerbefehl an das Leistungs-Einstellmittel (9) zu senden, um das gegenwärtige Motordrehmoment zu steuern, um das Motordrehmoment durch rampenartiges Erhöhen des aktuellen Motordrehmomentniveaus auf das gespeicherte Anfangs-Motordrehmomentniveau während einer zweiten Zeitperiode zu erhöhen.

22. System nach Anspruch 16 bis 21, wobei die unteren Drehmomentniveaus nach Maßgabe von $M_{max} = M_E - K\Delta n$ berechnet werden, wobei $M_{max}$ das maximal zulässige Motordrehmoment ist, $M_E$ ein Wert ist, der dem gegenwärtigen Motordrehmoment entspricht, K ein vorbestimmter Reduktionsfaktor ist, und $\triangle n$ der berechnete Kupplungsschlupf ist.

23. Computerprogramm (24) für eine elektronische Steuereinheit (25) eines Fahrzeugs zum Schutz vor Kupplungsschlupf,
**dadurch gekennzeichnet, dass** das Programm (24) Programmanweisungen aufweist, welches dann, wenn es auf der elektronischen Steuereinheit (25) läuft, die elektronische Steuereinheit (25) dazu veranlasst, die Schritte von einem der Ansprüche 1 bis 11 auszuführen.

24. Computerprogrammprodukt, umfassend ein computerlesbares Medium (21) und ein Computerprogramm (24) nach Anspruch 23, wobei das Computerprogramm (24) auf dem computerlesbaren Medium (21) gespeichert ist.

25. Elektronische Steuereinheit (25) eines Fahrzeugs,
**dadurch gekennzeichnet, dass** ein Speichermittel (21) der Steuereinheit ein Computerprogramm (24) nach Anspruch 23 umfasst.

**Revendications**

1. Procédé de protection d'embrayage contre le patinage dans un véhicule entraîné par un moteur (1), ledit embrayage (2) étant disposé dans une voie de transmission de couple dudit moteur (1) entre ledit moteur (1) et une boîte de vitesse (3), dans lequel ledit véhicule comprend en outre un moyen de réglage de sortie (9) agencé de manière à régler la puissance de sortie dudit moteur (1), ledit procédé comprenant les étapes consistant à obtenir (42) une valeur correspondant à la vitesse du moteur du véhicule ; et si la survenance du patinage de l'embrayage est établie, à contrôler (34, 50) le couple actuel du moteur afin d'obtenir la cessation dudit patinage de l'embrayage, **caractérisé par** les étapes consistant à :

   obtenir (42) une valeur correspondant à la vitesse de l'arbre de transmission ; déterminer (44) le quotient entre la valeur correspondant à la vitesse du moteur et la valeur correspondant à la vitesse de l'arbre de transmission sous la forme d'une valeur de rapport de vitesse ; estimer (30, 46) une valeur de rapport de vitesse de ladite boîte de vitesse en calculant (44) de manière sensiblement continue la relation actuelle entre la vitesse du moteur et la vitesse de l'arbre de transmission ; établir (32, 48) la survenance ou la non survenance du patinage dudit embrayage à l'aide de ladite valeur de rapport de vitesse estimée.

2. Procédé selon la revendication 1, dans lequel l'étape d'estimation comprend en outre les étapes consistant à : sélectionner (46) une valeur de rapport de vitesse préalablement mémorisée représentant une valeur actuelle de rapport de vitesse dudit véhicule ; comparer (52) ladite valeur de rapport de vitesse calculée avec ladite valeur de rapport de vitesse sélectionnée au cours d'une première période de temps ; et si ladite valeur de rapport de vitesse calculée est sensiblement égale à ladite valeur de rapport de vitesse sélectionnée au cours de ladite première période de temps, déterminer (52) ladite valeur de rapport de vitesse sélectionnée comme étant la valeur de rapport de vitesse actuelle.

3. Procédé selon la revendication 1 ou 2, dans lequel la survenance ou la non survenance d'un patinage de l'embrayage est établie si $\Delta n > d$, avec $\Delta n = n_{moteur} - n_{boîte}$ de vitesse X G|, $\Delta n$ étant le patinage de l'embrayage, $n_{moteur}$ étant la valeur correspondant à la vitesse du moteur, $n_{boîte}$ de vitesse étant la valeur correspondant à la vitesse de l'arbre de transmission, d étant un nombre prédéterminé et G étant ladite valeur de rapport de vitesse actuelle déterminée.

4. Procédé selon les revendications 1 à 3, comprenant en outre les étapes consistant à : si la survenance du patinage de l'embrayage est établie (32, 48), obtenir (50) une valeur correspondant au niveau de couple du moteur ; et mémoriser (50) ladite valeur correspondant au niveau de couple du moteur comme un niveau de couple de moteur initial.

**5.** Procédé selon les revendications 1 à 4, dans lequel l'étape de contrôle comprend les étapes consistant à : réduire (50) le niveau de couple moteur actuel à un premier niveau de couple de moteur inférieur, dans lequel ledit premier niveau de couple de moteur inférieur est fondé sur ladite valeur de rapport de vitesse estimée ; et maintenir (52) ledit premier couple de moteur inférieur pendant une première période de temps.

**6.** Procédé selon les revendications 1 à 5, comprenant en outre l'étape consistant à : établir (32, 48) si un patinage d'embrayage a cessé à l'aide de ladite valeur de rapport de vitesse estimée.

**7.** Procédé selon la revendication 6, dans lequel l'étape consistant à établir si ledit patinage d'embrayage a cessé comprend les étapes consistant à : s'il est déterminé que ladite valeur de rapport de vitesse sélectionnée est le rapport de vitesse actuel, réduire ledit couple de moteur à un second niveau de couple de moteur inférieur ; et maintenir (54) le couple de moteur actuel audit au moins second niveau inférieur pendant une seconde période de temps prédéterminée.

**8.** Procédé selon la revendication 6 ou 7, comprenant en outre l'étape consistant à : s'il est établi que ledit patinage d'embrayage a cessé, augmenter (56) successivement le niveau de couple de moteur actuel jusqu'audit niveau de couple de moteur initial.

**9.** Procédé selon la revendication 6, comprenant en outre l'étape consistant à : s'il n'est pas établi que ledit patinage d'embrayage a cessé, réduire (50) le niveau de couple de moteur actuel à au moins un second niveau de couple de moteur inférieur, dans lequel ledit premier niveau de couple de moteur inférieur est fondé sur ladite valeur de rapport de vitesse estimée ; et maintenir (52) ledit second niveau de couple de moteur pendant une période de temps sensiblement égale à ladite première période de temps.

**10.** Procédé selon la revendication 8, dans lequel l'étape d'augmentation comprend l'étape consistant à : accélérer (56) ledit niveau de couple de moteur actuel jusqu'au niveau de couple de moteur initial mémorisé pendant une seconde période de temps.

**11.** Procédé selon les revendications 5 à 10, comprenant en outre l'étape consistant à calculer lesdits niveaux de couple de moteur inférieurs en fonction de $M_{max} = M_E - K\Delta n$, $M_{max}$ étant le couple de moteur maximum autorisé, $M_E$ étant une valeur correspondant au couple de moteur actuel, K étant un facteur de réduction prédéterminé et $\Delta n$ étant le patinage d'embrayage calculé.

**12.** Système de protection d'embrayage contre le patinage dans un véhicule entraîné par un moteur (1), ledit embrayage (2) étant disposé dans une voie de transmission de couple dudit moteur (1) entre ledit moteur (1) et une boîte de vitesse (3), dans lequel ledit véhicule comprend en outre un moyen de réglage de sortie (9) agencé de manière à régler la puissance de sortie dudit moteur (1), ledit système comprenant un moyen de protection de l'embrayage contre le patinage (6) ; et un moyen de détection de vitesse du moteur (10) agencé de manière à détecter la vitesse du moteur du véhicule, dans lequel le moyen de protection de l'embrayage contre le patinage (6) est agencé pour obtenir une valeur correspondant à la vitesse du moteur du véhicule ; et si la survenance du patinage de l'embrayage est établie, envoyer une instruction de contrôle audit moyen de réglage de sortie (9) afin de contrôler le couple actuel du moteur afin d'obtenir la cessation dudit patinage de l'embrayage, **caractérisé en ce que** ledit système comprend un moyen de détection de la vitesse de l'arbre de sortie (4) agencé pour détecter la vitesse de l'arbre de transmission, ledit moyen de détection (4, 10) étant agencé de manière à communiquer avec ledit moyen de protection de l'embrayage contre le patinage (6), dans lequel ledit moyen de protection de l'embrayage contre le patinage (6) est agencé de manière à obtenir une valeur correspondant à la vitesse de l'arbre de transmission ; déterminer le quotient entre la vitesse du moteur et la vitesse de l'arbre de transmission sous la forme d'une valeur de rapport de vitesse ; et dans lequel ledit moyen de protection de l'embrayage contre le patinage (6) comprend un moyen de traitement (20) et un moyen de mémorisation (12) agencés de manière à mémoriser ladite valeur de rapport de vitesse, dans lequel ledit moyen de protection de l'embrayage contre le patinage est agencé pour : calculer de manière sensiblement continue la relation actuelle entre la vitesse du moteur et la vitesse de l'arbre de transmission afin d'estimer une valeur de rapport de vitesse de ladite boîte de vitesse (3) ; établir la survenance ou la non survenance du patinage dudit embrayage à l'aide de ladite valeur de rapport de vitesse estimée.

**13.** Système selon la revendication 12, dans lequel ledit moyen de protection de l'embrayage contre le patinage (6) est agencé de manière à sélectionner une valeur de rapport de vitesse préalablement mémorisée représentant une valeur actuelle de rapport de vitesse dudit véhicule en tant que valeur de rapport de vitesse actuelle ; comparer ladite valeur de rapport de vitesse calculée avec ladite valeur de rapport de vitesse sélectionnée au cours d'une première période de temps ; et si ladite valeur de rapport de vitesse calculée est sensiblement égale à ladite valeur de rapport de vitesse sélectionnée au cours de ladite première période de temps, déterminer ladite valeur de rapport de vitesse sélectionnée comme étant la valeur de rapport de vitesse actuelle.

**14.** Système selon la revendication 12 ou 13, dans lequel la survenance ou la non survenance d'un patinage de l'embrayage est établie si $\Delta n > d$, avec $\Delta n -| n_{moteur} - n_{boîte\ de\ vitesse} \times G | \Delta n$ étant le patinage de l'embrayage, $n_{moteur}$ étant la valeur correspondant à la vitesse du moteur, $n_{boîte}$ de vitesse étant la valeur correspondant à la vitesse de l'arbre de transmission, d étant un nombre prédéterminé et G étant ladite valeur de rapport de vitesse actuelle déterminée.

**15.** Système selon les revendications 12 à 14, dans lequel ledit véhicule comprend en outre un moyen de détection agencé de manière à détecter de manière sensiblement constante le niveau de couple de moteur actuel, dans lequel ledit moyen de protection de l'embrayage contre le patinage (6) est agencé pour obtenir une valeur correspondant au niveau de couple de moteur actuel.

**16.** Système selon les revendications 12 à 15, dans lequel ledit moyen de protection de l'embrayage contre le patinage (6) est agencé pour envoyer une instruction de contrôle audit moyen de réglage de sortie (9) afin de contrôler le couple de moteur actuel pour réduire le niveau de couple de moteur actuel à un premier niveau de couple de moteur inférieur, dans lequel ledit premier niveau de couple de moteur inférieur est fondé sur ladite valeur de rapport de vitesse estimée ; et maintenir ledit premier couple de moteur inférieur pendant une première période de temps.

**17.** Système selon les revendications 12 à 16, dans lequel ledit moyen de protection de l'embrayage contre le patinage (6) est agencé pour établir si un patinage d'embrayage a cessé à l'aide de ladite valeur de rapport de vitesse estimée.

**18.** Système selon la revendication 17, dans lequel ledit moyen de protection de l'embrayage contre le patinage (6) est agencé pour envoyer une instruction de contrôle audit moyen de réglage de sortie (9) afin de contrôler le couple de moteur actuel : s'il est déterminé que ladite valeur de rapport de vitesse sélectionnée est le rapport de vitesse actuel, réduire ledit couple de moteur à un second niveau de couple de moteur inférieur ; et maintenir le couple de moteur actuel audit au moins second niveau inférieur pendant une seconde période de temps prédéterminée.

**19.** Système selon la revendication 17 ou 18, dans lequel ledit moyen de protection de l'embrayage contre le patinage (6) est agencé pour envoyer une instruction de contrôle audit moyen de réglage de sortie (9) afin de contrôler le couple de moteur actuel : s'il est établi que ledit patinage d'embrayage a cessé, augmenter successivement le niveau de couple de moteur actuel jusqu'audit niveau de couple de moteur initial.

**20.** Système selon la revendication 17, dans lequel ledit moyen de protection de l'embrayage contre le patinage (6) est agencé pour envoyer une instruction de contrôle audit moyen de réglage de sortie (9) afin de contrôler le couple de moteur actuel : s'il n'est pas établi que ledit patinage d'embrayage a cessé, réduire le niveau de couple de moteur actuel à au moins un second niveau de couple de moteur inférieur, dans lequel ledit premier niveau de couple de moteur inférieur est fondé sur ladite valeur de rapport de vitesse estimée ; et maintenir ledit second niveau de couple de moteur pendant une période de temps sensiblement égale à ladite première période de temps.

**21.** Système selon la revendication 19, dans lequel ledit moyen de protection de l'embrayage contre le patinage (6) est agencé pour envoyer une instruction de contrôle audit moyen de réglage de sortie (9) afin de contrôler le couple de moteur actuel pour augmenter ledit couple de moteur en accélérant ledit niveau de couple de moteur actuel jusqu'au niveau de couple de moteur initial mémorisé pendant une seconde période de temps.

**22.** Système selon les revendications 16 à 21, dans lequel lesdits niveaux de couple de moteur inférieurs sont calculés en fonction de $M_{max} = M_E - K\Delta n$, $M_{max}$ étant le couple de moteur maximum autorisé, $M_E$ étant une valeur correspondant au couple de moteur actuel, K étant un facteur de réduction prédéterminé et $\triangle n$ étant le patinage d'embrayage calculé.

**23.** Programme informatique (24) pour une unité de contrôle électronique (25) d'un véhicule, destiné à protéger l'embrayage contre le patinage, **caractérisé en ce que** ledit programme (24) comprend des instructions de programme qui, lorsqu'elles sont exécutées sur l'unité de contrôle électronique (25), amènent l'unité de contrôle électronique (25) à effectuer les étapes selon l'une quelconque des revendications 1 à 11.

**24.** Produit de programme informatique comprenant un support lisible par ordinateur (21) et un programme informatique (24) selon la revendication 23, dans lequel ledit programme informatique (24) est mémorisé sur ledit support lisible par ordinateur (21).

25. Unité de contrôle électronique (25) d'un véhicule, **caractérisée en ce qu'**un moyen de mémorisation (21) de ladite unité de contrôle comprend un programme informatique (24) selon la revendication 23.

Fig. 1

Fig. 2

30 ⟋ Estimating a gear ratio of
the gearbox ←

32 ⟋ Occurrence of clutch slip
established ? — No

Yes

34 ⟋ Adjusting the engine torque
in order to stop the clutch
slip

Fig. 3

Fig. 4

Fig. 5

**EP 1 710 143 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6033342 A